# EUROPÄISCHE PATENTSCHRIFT

(11) **EP 3 044 251 B1**
(45) Veröffentlichungstag und Bekanntmachung des Hinweises auf die Patenterteilung: **25.11.2026**
(21) Anmeldenummer: 14738846.6
(22) Anmeldetag: 15.07.2014
(51) Int. Cl.: C08J 5/18, B29C 71/04, B29C 51/00, B29C 51/14, B29C 59/02, C08L 23/08, C08L 23/12, C08J 3/28

(54) **FOLIE UND VERFAHREN ZU DEREN HERSTELLUNG**
FILM AND METHOD FOR PRODUCING SAME
FEUILLE ET SON PROCÉDÉ DE FABRICATION

(30) Priorität: 12.09.2013 DE 102013110036
(43) Veröffentlichungstag der Anmeldung: 20.07.2016
(73) Patentinhaber: Benecke-Kaliko GmbH, 30419 Hannover (DE)
(72) Erfinder: MANI, Joseph, 73054 Eislingen (DE); HÜLSEWEDE, Volker, 73114 Schlat (DE); MALNER, Thomas, 73033 Göppingen (DE); BÜHRING, Jürgen, 30900 Wedemark (DE)
(74) Vertreter: Preusser, Andrea
(86) Internationale Anmeldenummer: PCT/EP2014/065062
(87) Internationale Veröffentlichungsnummer: WO 2015/036148

(56) Entgegenhaltungen:
- EP-A1- 0 601 790
- EP-A1- 0 864 927
- EP-A1- 1 698 659
- EP-A1- 2 263 856
- EP-A2- 0 326 408
- EP-A2- 0 877 052
- WO-A1-2012/161278
- DE-A1- 102011 053 224
- US-A- 5 061 572
- US-A1- 2009 105 397
- US-A1- 2011 082 258
- "Alkene Polymerization Reactions with Transition Metal Catalysts", 10 March 2008, article YURY KISSIN: "Alkene Polymerization Reactions with Transition Metal Catalysts", XP055379340
- DOW CHEMICAL: "Nordel IP 4570", 31 December 2002 (2002-12-31), XP093022241, Retrieved from the Internet <URL:https://www.shamaoilsnrubber.com/data/EPDM%204570.pdf> [retrieved on 20230208]

## Beschreibung

Die Erfindung betrifft eine mehrlagige Folie umfassend wenigstens eine Oberfolie und eine Unterfolie. Die Folie wird insbesondere für Automobilinnenverkleidung verwendet.

Folien und Folienlaminate, d.h. mehrschichtige Folien, die auf Polyvinylchlorid (PVC) oder auf thermoplastischen Polyolefinen (TPO) oder auf Polyurethanen (PU bzw. PUR) basieren, sind aus dem Stand der Technik bereits hinreichend bekannt. Sie werden in unterschiedlichsten Bereichen, z. B. der Verpackungsindustrie oder im Automobilbereich, eingesetzt. Für den Einsatz in den verschiedenen Bereichen, insbesondere im Bereich von Automobilinnenverkleidungen, werden die Folien oder Folienlaminate durch Tiefziehprozesse oder andere verformende Prozesse weiterverarbeitet, um die gewünschte Form, beispielsweise die Form einer Automobilinnenverkleidung, zu erhalten. An die Folien oder Folienlaminate werden hohe Anforderungen hinsichtlich ihrer chemischen und physikalischen Eigenschaften gestellt, so sollen vor allem genarbte Folien eine gute Narbbeständigkeit und gleichzeitig eine gute Kratzbeständigkeit aufweisen. In EP 1149858 A1 wird bspw. eine TPO-Folie zur besseren Narbbeständigkeit mit Elektronenstrahlen behandelt. In EP 1688460 B1 wird eine TPO-Folie offenbart, die zwar bereits eine gute Narbbeständigkeit aufweist, deren Kratzbeständigkeit allerdings nicht ausreichend ist. Typischerweise zeigen TPO-Folien für den Automobilinnenraum verglichen mit PVC- oder PU-Folien eine deutlich geringere Kratzbeständigkeit auf. Gleichzeitig ist das Erreichen eines Glanzgrades von kleiner 1,5 nach dem Tiefziehen wünschenswert, um eine hochwertige Optik der Folie zu erreichen und Reflektionen z.B. in Windschutzscheiben zu minimieren. Die Reduktion des Glanzgrades wird durch Einbringung einer definierten Oberflächenrauigkeit und der damit erzeugten diffusen Lichtstreuung bewirkt. Die Oberflächenrauigkeit wird in verschiedenen Längenskalierung eingebracht. In der Regel wird die gröbste optisch wirksame Rauigkeit über die Narbung eingebracht. Durch Mattierungsmittel in der Lackschicht erfolgt zumeist die Einbringung einer feineren Rauigkeit. Beides zusammen ist bisher jedoch nicht ausreichend, um 1,5 Glanzeinheiten nach dem Tiefziehen zu erreichen. Es ist weiterhin notwendig, daß die Folienrezeptur durch ihre Morphologie eine sehr feine Oberflächenrauigkeit aufweist. Der Rauigkeitsbeitrag durch die Morphologie der Folienrezeptur lässt sich unabhängig von der Narbung und Lackierung direkt am tiefgezogenen extrudierten Muster bestimmen. Nur wenn das extrudierte tiefgezogene Muster einen niedrigen Glanzgrad aufweist, kann erwartet werden, am lackierten genarbten Bauteil den geforderten Glanzgrad vorzufinden.

Aus dem Stand der Technik sind verschiedene Folien und Formkörper für Anwendungen im Automobilinnenraum bekannt. So offenbart DE 10 2011 053224 A1 Folien für das narbgebende Negativ Tiefziehverfahren (IMG), die aus thermoplastischen Elastomerzusammensetzungen auf Basis von thermoplastischem Polyurethan, Polyolefinen und einem polaren Phasenvermittler hergestellt werden und sich durch gute Verarbeitbarkeit, niedrigen Glanz und hohe Kratzbeständigkeit auszeichnen. EP 2 263 856 A1 betrifft ebenfalls Formkörper für den Automobilinnenraum, die im IMG Verfahren hergestellt werden und eine Kombination aus hoher Kratzbeständigkeit und niedrigem Glanzgrad aufweisen, wobei als Ausgangsmaterial Zusammensetzungen auf Basis unvernetzter Polyolefine und Ionomere eingesetzt werden.

Darüber hinaus beschreibt EP 0 601 790 A1 thermoplastische Elastomerfolien auf Basis von Polypropylen und Ethylen α Olefin Copolymerkautschuken, insbesondere EPDM Systeme, wobei auch mehrschichtige Folienstrukturen offenbart sind. Weitere Patente wie EP 0 326 408 A2 betreffen mehrschichtige Formkörper mit thermoplastischen Elastomer Deckschichten auf Polyolefinbasis, während US 2009/105397 A1 polymerische Formartikel mit verstärkten Thermoplastmischungen beschreibt. US2011/082258 A1 offenbart Kompatibilisatoren in Form von Blockkompositen für TPV Systeme, EP 0 877 052 A2 beschreibt den Einsatz von Ölkomponenten zur Beeinflussung der Schmelzeigenschaften, und US 5 061 572 A betrifft Laminatmaterialien mit haftvermittelnden Zwischenschichten.

Der Erfindung liegt daher die Aufgabe zugrunde, eine mehrschichtige TPO-Folie bereitzustellen, die sich durch eine gute Kratzbeständigkeit und einen ausreichenden Glanzgrad auszeichnet. Die Folie soll im Positiv-Tiefziehprozess verarbeitet werden können und eine gute Abformung der Narbe und Ausformung der Bauteilgeometrie im Negativ-Tiefziehverfahren bzw. im IMG-Verfahren zeigen. Beim IMG-Verfahren (InMoldGraining-Verfahren) erfolgt im Vergleich zum herkömmlichen Kaschierprozess, bei dem eine genarbte Folie aus einem Trägerteil mittels Vakuum aufkaschiert wird, der Narbauftrag unmittelbar vor dem Kaschierprozess. Dies erfolgt durch eine Form, die bereits die Narbstruktur enthält und diese Struktur auf die heiße Folie übergibt. Diese genarbte Folie wird in diesem vorgeformten Zustand direkt auf das Trägerteil appliziert.

Beim Positiv-Tiefziehverfahren wird die Folie bereits beim Kaschieren mit einer Narbung , d.h. durch einen vorhergehenden Prägevorgang mit einer dreidimensionalen Oberflächenstruktur, versehen. Diese Narbung darf durch das Strecken der Folie beim Tiefziehprozess nur so verändert werden, dass die Optik des finalen Bauteils den Anforderungen des Kunden entspricht. Um diese Stabilität zu erreichen, ist es bekannt, die Folie vor dem Tiefziehen durch Elektronenstrahlen zu vernetzen. Der Vernetzungsprozess kann durch Zugabe von Vernetzungshilfsmittel unterstützt werden.

Die Beständigkeit der Oberflächen gegen kratzende Gegenstände erlangt zunehmend Bedeutung. Die Kratzbeständigkeit wird nach Erichsen 318 mit einem Nadeldurchmesser von 0,75mm geprüft und soll bei einer lederähnlichen Narbe mit eine Narbtiefe mit 300µm mindestens 3N Kratzbeständigkeit oder mehr aufweisen. Eine weitere Randbedingung ist ein niedriger Glanzgrad auf dem Bauteil.

Gelöst wird die Aufgabe durch eine mehrlagige Folie umfassend wenigstens eine Oberfolie und Unterfolie, dadurch gekennzeichnet, dass die Oberfolie 15 bis 90 phr wenigstens eines auf Ethylen-basierten Polymers mit einer Mooneyviskosität (ML1+4, 121°C) von 50 bis 80 Mooney-Einheiten gemäß ASTM D1646, wobei das Ethylen-basierte Polymer mindestens 50 Gew.-% Ethylen Einheiten und eine Dichte von kleiner 0,90 g/cm³ hat, und 10 bis 85 phr wenigstens eines Polypropylens mit einem Biegemodul gemäß ISO 178 von größer oder gleich 800 MPa enthält, wobei das Polypropylen ein Homo-Polypropylen ist und wobei die Oberfolie zusätzlich wenigstens einen Phasenvermittler enthält, wobei der Phasenvermittler Random-Polypropylen ist, und wobei die Unterfolie kompakt oder geschäumt ist und / oder ein Textil enthält.

Überraschenderweise kann eine derartige Folie im Positiv-Tiefziehverfahren verarbeitet werden und zeigt eine deutliche Kratzbeständigkeit bei weiterhin guter Narbbeständigkeit auf. Gleichzeitig ergibt sich eine gute Abformung der Narbe und Ausformung der Bauteilgeometrie im IMG-Verfahren.

Das Ethylen-basierte Polymer wird hierbei als Weichphase bezeichnet und hat eine Mooneyviskosität (ML1+4, 121°C) von 50 bis 80 Mooney-Einheiten (MU, Mooney-Units), bevorzugt von 54 bis 70 Mooney-Einheiten. Die Mooney-Viskosität wird gemäß ASTM D1646 bestimmt. Die Mooney-Viskosität kann über einen hohen Verzweigungsgrad der Polymere und / oder ein hohes Molekulargewicht eingestellt werden. Das Ethylen-basierte Polymer wird in Mengen von 15 bis 90 phr bevorzugt in Mengen von 50 bis 70 phr eingesetzt.

Die Kristallinität des Ethylen-basierten Polymers ist in einer besonders bevorzugten Ausführungsform kleiner oder gleich 30%, bevorzugt kleiner oder gleich 20%. Die Kristallinität wird mittels DSC gemäß ISO11357-1:2009 bestimmt.

Das Ethylen-basierte Polymer hat mindestens 50 Gew.% Ethylen Einheiten und eine Dichte von kleiner 0,90 g/cm³.

Als Ethylen-basierte, weiche Polymere können bspw. Ethylen-basierte Copolymere und / oder Ethylen-Propylen-Copolymeren (PEP) und / oder Ethylen-Propylen-Kautschuk (EPR) EPM-Kautschuk, EPDM-Kautschuk und / oder Polyethylene verwendet werden.

Das erfindungsgemäß vorhandene Polypropylen wird als hierbei Hartphase bezeichnet. Es zeichnet sich durch ein Biegemodul von größer oder gleich 800 MPa, bevorzugt von größer oder gleich 1200 MPa, aus. Das Polypropylen wird in Mengen von 10 bis 85 phr, bevorzugt in Mengen von 30 bis 50 phr verwendet. Als Polypropylen wird PP-Homo (Polypropylen, Homo-Polymer) verwendet. Zusätzlich enthält die Oberfolie wenigstens einen Phasenvermittler. PP-Homo bildet dabei üblicherweise die disperse Phase, während das Ethylen-basierte Polymer die kontinuierliche Matrix bildet. Die Mischbarkeit und die Größe der entstehenden Phasen wird durch Wechselwirkungen zwischen den Polymeren sowie durch den Zusatz von Phasenvermittlern bestimmt. Als Phasenvermittler wird hierbei PP-Random (Random-Polypropylen) eingesetzt, das sich an der Phasengrenzfläche anlagern. Dadurch können gute mechanische und chemische Eigenschaften erhalten werden.

Der Phasenvermittler hat bevorzugt einen Schmelzflußindex MFI (230 °C, 2,16 kg) von 0,1 bis 4,0 g/10 min, besonders bevorzugt von 0,2 bis 1,0 g/10 min, ganz besonders bevorzugt von 0,3 bis 0,5 g/10 min.

Neben den Polymerbestandteilen kann die zur Folienherstellung eingesetzte Masse vorzugsweise eine Reihe von Hilfsmitteln, wie Vernetzungshilfsmittel, Antioxidationsmittel, Lichtschutzmittel, Pigmente, Gleitmittel und/oder Alterungsschutzmittel enthalten.

Als besonders vorteilhaft hat es sich erwiesen, als Antioxidantionsmittel Phenolderivate, Lactone und/oder Phosphite und als Lichtschutzmittel sterisch gehinderte Amine oder Benzotriazine in einer Menge von weniger als etwa 5 Gew.-%, vorzugsweise bis zu 3,5 Gew.-%, insbesondere von 0,2 bis 2,5 Gew.-%, bezogen auf das Gewicht der Masse, einzusetzen.

Um ein gute Narbbeständigkeit der Folie beim Positiv-Tiefziehen zu erzielen, ist es von Vorteil, wenn die die Oberfolie der mehrlagigen Folie nach dem die Narbstruktur bildenden Prägeschritt und der Vernetzung im Rahmen des Positiv-Tiefziehverfahrens einen Gelgehalt von 10 bis 80 Gew.- %, bevorzugt von 25 bis 50 Gew.-%, gemessen nach 24-stündiger Extraktion in siedendem Xylol, aufweist. Folien mit einem derartigen Gelgehalt lassen sich tiefziehen und/oder andersartig verformen, ohne dass die Narbstruktur dabei wesentlich verändert oder beeinträchtigt wird.

Im Anschluss an die Prägung erfolgt eine weitergehende Vernetzung des Materials für eine hohe Narbfestigkeit beim Tiefziehen und/oder Verformen. Die nach dem die Narbstruktur bildenden Prägeschritt erfolgende weitere Vernetzung kann auf chemischem Weg oder physikalisch erfolgen.

Bei der physikalischen Vernetzung hat es sich als vorteilhaft erwiesen, wenn die weitere Vernetzung durch Elektronenstrahlen erfolgt. Hierbei wird eine besonders gute Verteilung der Netzknoten erreicht, die für einen guten Narberhalt und eine gleichmäßige Verstreckung der Folie auf dem Bauteil nach dem Thermoformieren wichtig sind. Dabei wird bei Kompaktfolien bevorzugt mit einer Bestrahlungsdosis von 10 bis 300 kGy, insbesondere 30 bis 150 kGy, bei Folienlaminaten mit einer Bestrahlungsdosis von 20 bis 150 kGy, insbesondere 30 bis 100 kGy, bestrahlt.

Zur Verwendung der Folie im Negativ-Tiefziehverfahren bzw. im IMG-Verfahren ist zunächst keine Vernetzung durch Elektronenstrahlen notwendig. Hier wird die Folie zunächst ohne Prägung kaschiert. Um eine gute Narbabformung im IMG-Prozess zu erreichen ist eine ausreichende niedrige Schmelzviskosität der Folie bei den für den Narbungsprozess relevanten Bedingungen vorteilhaft. Im IMG-Prozess wird die Folie bevorzugt bei einer Temperatur von größer 160°C verformt und genarbt. Die im IMG-Prozess eingebrachte Narbe muss auf dem Bauteil bei einer Wärmelagerung von 120°C über einen Zeitraum von wenigstens drei Wochen stabil bleiben.

Die Folie kann während des und/oder vor dem und/oder nach dem die Narbstruktur bildenden Prägeschritt und/oder vor und/oder nach der Vernetzung zu einem mehrlagigen Verbundgebilde laminiert und/oder beschichtet, z. B. mit einem PUR-Lack, und im Anschluss an die weitergehende Vernetzung zu einem mehrlagigen, genarbten Formkörper, beispielsweise einer Innenverkleidung eines Kraftfahrzeuges, tiefgezogen werden.

Die mehrlagige Folie umfasst wenigstens eine Oberfolie und eine Unterfolie, wobei die Oberfolie die erfindungsgemäße Zusammensetzung enthält.

Die Unterfolie ist kompakt oder geschäumt und/oder enthält ein Textil.

Die mehrlagige Folie kann mit einem Träger, z. B. aus ABS oder Naturfasern, versehen werden, dabei ist es von Vorteil, wenn der Träger bei der Herstellung der genarbten, mehrlagigen Folie direkt beim Tiefziehprozess mit dem genarbten, mehrlagigen Folienlaminat verbunden wird. Die Verbindung von Träger und Unterfolie kann dabei über ein Klebersystem erfolgen.

Die Erfindung wird nun anhand von Ausführungsbeispielen näher erläutert. Dazu wurden tiefgezogene, genarbte Formkörper gemäß folgender Beschreibung hergestellt:
Die in den folgenden Tabellen 1 und 2 formulierten Zusammensetzungen mit den Mengen der Substanzen in Gewichtsteilen wurden auf einem Zweischneckenextruder zu Folien der Dicke 0,5 mm extrudiert. Die Mengenangaben der einzelnen Bestandteile sind gemäß der in der Kautschukindustrie üblicherweise verwendeten Mengenangabe phr (parts per hundred parts of rubber) angegeben.

Die Bestimmung des Gelgehaltes erfolgte dabei nach folgendem Verfahren:
Die Gelgehalte wurden nach der Extraktionsmethode erhalten. Die Proben wurden in ca. 1mm große Streifen geschnitten und 0,1 g ± 0,01 g auf ein Netz eingewogen, von welchem das Nettogewicht bekannt ist. Das Netz wird so gefaltet, dass die Streifen im Netz eingeschlossen sind. Anschließend wird jedes Netz in ein Reagenzglas gegeben. Es werden in jedes Reagenzglas 50 mL Xylol hinzugegeben. Um ein Aufschwimmen der Probe zu verhindern, werden Stahlnetze hineingehängt, so dass ein komplettes Eintauchen in das Xylol gewährleistet werden kann. Die Proben werden mit Alufolie verschlossen und für 16 h in ein auf 145°C vorgeheiztes Ölbad gestellt. Anschließend werden die Reagenzgläser aus dem Ölbad genommen.

Die Netze werden je auf eine Aluschale gelegt und 5 h bei 150°C im Trockenschrank getrocknet. Nach dem Abkühlen auf Raumtemperatur werden sie zusammen mit den Aluschalen ausgewogen, wobei auch hier das Nettogewicht der einzelnen Aluschale bekannt sein muss.

Die Ermittlung des Glanzes nach der Extrusion in Tabelle 2 erfolgt hierbei unter einem Winkel von 60° mit einem Gerät Byk Gardner Mikro Gloss. Die Ermittlung des Glanzes nach dem Tiefziehen in Tabelle 2 erfolgt hierbei bei einer Verstreckung von 60 bis 100 % in unlackierter Form unter einem Winkel von 60° mit einem Gerät Byk Gardner Mikro Gloss
In der Tabelle 1 sind Folien beschrieben, die mittels Positiv-Tiefziehverfahren hergestellt wurden. Tabelle 2 beschreibt Folien, welche mittels IMG-Verfahren weiterverarbeitet werden können.

Mit "V" sind jeweils Vergleichsbeispiele gekennzeichnet, während die mit "E" gekennzeichneten Beispiele jeweils erfindungsgemäß sind.

Die erfindungsgemäßen Beispiele E1 bis E4 zeigen jeweils eine hervorragende Kratzbeständigkeit.

**Tabelle 1: Folienzusammensetzungen für Positiv-Tiefziehanwendungen**

| Substanz | V 1 | V 2 | V3 | E 1 | E 2 |
|---|---|---|---|---|---|
| TPE-V Blend | 60 | -- | -- | -- | -- |
| PE 1 | 20 | 60 | -- | -- | -- |
| PE 2 | -- | -- | 60 | 60 | -- |
| PE 3 | -- | -- | -- | -- | 60 |
| PP 1 | 20 | 35 | -- | 35 | 35 |
| PP 2 | -- | 5 | -- | 5 | 5 |
| PP/EPM- Blend | -- | -- | 40 | -- | -- |
| UV-Lichtschutzmittel | 0,2 | 0,2 | 0,2 | 0,2 | 0,2 |
| Antioxidationsmittel | 0,3 | 0,3 | 0,3 | 0,3 | 0,3 |
| Ruß | 2,0 | 2,0 | 2,0 | 2,0 | 2,0 |
| | | | | | |
| Extrusionsverhalten | ok | ok | ok | ok | ok |
| MFI (230°C/2,16 kg) | 1,8 g/10 min | 1,0 g/10 min | 0,8 g/10 min | 0,9 g/10 min | 0,8 g/10 min |
| Prägegeschwindigkeit | 6 m/min | 6 m/min | 6 m/min | 6 m/min | 6 m/min |
| Vernetzungsdosis [kGy] | 75 | 75 | 75 | 75 | 75 |
| Gelgehalt der Folie zum Zeitpunkt des Prägeschrittes | 18% | <2% | <2% | <2% | <2% |
| Gelgehalt der Folie zum Zeitpunkt des | 18 % | 35 % | 32 % | 30 % | 40 % |
| Tiefziehens | | | | | |
| Tiefziehen | Narbverflachung, Aufglänze n | prägnante Narbe, kein Aufglänze n | prägnante Narbe, kein Aufglänze n | prägnante Narbe, kein Aufglänze n | prägnante Narbe, kein Aufglänze n |
| Tᵥₒᵣ = 170°C | | | | | |
| T_{rück} = 180°C | | | | | |
| Kratzbeständigkeit | 2 N | 2 N | 2 N | 4 N | 5N |

| | | | | | |
|---|---|---|---|---|---|
| TPE-V Blend: Thermoplastisches Elastomer bestehen aus 35 Gew.-% PP und 65 Gew.-% EPM, MFI 15 g/10 min (230 °C/ 10 kg), Gelgehalt 28% PE 1: Ethylen-Buten Copolymere, Mooneyviskosität ML [121°C 1+4]: 47MU, Erweichungspunkt ca. 50°C PE 2: Ethylen-Buten Copolymere, Mooneyviskosität ML [121°C 1+4]: 54MU, Erweichungspunkt ca. 50 °C PE 3: EPDM, ENB Anteil 4,9 %, Mooneyviskosität ML [121°C 1+4]:70MU, Erweichungspunkt ca. 50 °C PP 1: homo-PP, Biegemodul = 1200 MPa, MFI = 2,6 g/10min bei 230°C; 2,16 kg; Schmelzpunkt = 164 °C PP 2: r-PP, Biegemodul = 800 MPa, MFI = 0,3 g/10min bei 230°C; 2,16 kg; Schmelzpunkt = 143 °C PP/EPM- Blend: 20 Gew.-% h-PP und 80 Gew.-% EPM, Biegemodul = 380 MPa, MFI 0,8g/10 min (230 °C/ 2,16 kg), Erweichungspunkt ca. 140°C Lichtschutzmittel: Benzotriazol-Derivat Antioxidationsmittel: sterisch gehindertes Phenol | | | | | |

**Tabelle 2: Folienzusammensetzungen für IMG-Anwendungen**

| Substanz | V 4 | V 5 | V6 | E 3 | E4 |
|---|---|---|---|---|---|
| TPE-V Blend | 60 | -- | -- | -- | -- |
| PE 1 | 20 | 60 | -- | -- | -- |
| PE 2 | -- | -- | 60 | 60 | -- |
| PE 3 | -- | -- | -- | -- | 60 |
| PP 1 | 20 | 35 | -- | 35 | 35 |
| PP 2 | -- | 5 | -- | 5 | 5 |
| PP/EPM- Blend | -- | -- | 40 | -- | -- |
| UV-Lichtschutzmittel | 0,2 | 0,2 | 0,2 | 0,2 | 0,2 |
| Antioxidationsmittel | 0,3 | 0,3 | 0,3 | 0,3 | 0,3 |
| Ruß | 2,0 | 2,0 | 2,0 | 2,0 | 2,0 |
| Extrusionsverhalten | ok | ok | ok | ok | ok |
| MFI (230°C/2,16 kg) | 1,8 g/10 min | 1,0 g/10 min | 0,8 g/10 min | 0,9 g/10 min | 0,8 g/10 min |
| Kratzbeständigkeit | 2 N | 2 N | 2 N | 4 N | 5 N |
| Glanz nach Extrusion | 4,6 | 3,2 | 2,1 | 2,0 | 1,9 |
| Glanz nach dem Tiefziehen | 1,9 | 2,0 | 1,6 | 1,4 | 1,3 |

| | | | | | |
|---|---|---|---|---|---|
| TPE-V Blend: Thermoplastisches Elastomer bestehen aus 35 Gew.-% PP und 65 Gew.-% EPM, MFI 15 g/10 min (230 °C/ 10 kg), Gelgehalt 28% PE 1: Ethylen-Buten Copolymere, Mooneyviskosität ML [121°C 1+4]: 47MU, Erweichungspunkt ca. 50°C PE 2: Ethylen-Buten Copolymere, Mooneyviskosität ML [121°C 1+4]: 54MU, Erweichungspunkt ca. 50 °C PE 3: EPDM, ENB Anteil 4,9 %, Mooneyviskosität ML [121°C 1+4]:70MU, Erweichungspunkt ca. 50 °C PP 1: homo-PP, Biegemodul = 1200 MPa, MFI = 2,6 g/10min bei 230°C; 2,16 kg; Schmelzpunkt = 164 °C PP 2: r-PP, Biegemodul = 800 MPa, MFI = 0,3 g/10min bei 230°C; 2,16 kg; Schmelzpunkt = 143 °C PP/EPM- Blend: 20 Gew.-% h-PP und 80 Gew.-% EPM, Biegemodul = 380 MPa, MFI 0,8g/10 min (230 °C/ 2,16 kg), Erweichungspunkt ca. 140°C Lichtschutzmittel: Benzotriazol-Derivat Antioxidationsmittel: sterisch gehindertes Phenol | | | | | |

## Patentansprüche

1. Mehrlagige Folie umfassend wenigstens eine Oberfolie und Unterfolie, **dadurch gekennzeichnet, dass** die Oberfolie 15 bis 90 phr wenigstens eines auf Ethylen-basierten Polymers mit einer Mooneyviskosität ML1+4, gemessen bei 121 °C, von 50 bis 80 Mooney-Einheiten gemäß ASTM D1646 wobei das Ethylen-basierte Polymer mindestens 50 Gew.-% Ethylen Einheiten und eine Dichte von kleiner 0,90 g/cm3 hat, und 10 bis 85 phr wenigstens eines Polypropylens mit einem Biegemodul gemäß ISO 178 größer oder gleich 800 MPa enthält, wobei das Polypropylen ein Homo-Polypropylen ist und dass die Oberfolie zusätzlich wenigstens einen Phasenvermittler enthält, wobei der Phasenvermittler Random-Polypropylen ist, und dass die Unterfolie kompakt oder geschäumt ist und / oder ein Textil enthält.

2. Mehrlagige Folie nach Anspruch 1, **dadurch gekennzeichnet, dass** die Kristallinität des Ethylen-basierten Polymers kleiner oder gleich 30% beträgt, wobei die Kristallinität mittels DSC gemäß ISO11357-1:2009 bestimmt wird.

3. Mehrlagige Folie nach Anspruch 1 oder 2, **dadurch gekennzeichnet, dass** der Phasenvermittler einen Schmelzflußindex MFI **,** gemessen bei 230 °C unter einer Belastung von 2,16 Kg, von 0,1 bis 4,0 g/10 min hat.

4. Innenverkleidung eines Kraftfahrzeuges, aufweisend eine Folie nach einem der Ansprüche 1 bis 3.

## Claims

1. A multilayer film comprising at least one upper film and lower film, **characterised in that** at least the upper film contains 15 to 90 phr of at least one ethylene-based polymer having a Mooney viscosity ML1+4, measured at 121 °C, of 50 to 80 Mooney units according to ASTM D1646, wherein the ethylene-based polymer has at least 50 wt.% ethylene units and a density of less than 0.90 g/cm³, and 10 to 85 phr of at least one polypropylene having a flexural modulus according to ISO 178 of greater than or equal to 800 MPa, wherein the polypropylene is a homopolypropylene, and **in that** the upper film additionally contains at least one phase compatibiliser, wherein the phase compatibiliser is random polypropylene, and **in that** the lower film is compact or foamed and/or contains a textile.

2. The multilayer film according to claim 1, **characterised in that** the crystallinity of the ethylene-based polymer is less than or equal to 30%, wherein the crystallinity is determined by means of DSC according to ISO 11357-1:2009.

3. The multilayer film according to claim 1 or 2, **characterised in that** the phase compatibiliser has a melt flow index MFI, measured at 230 °C under a load of 2.16 kg, of 0.1 to 4.0 g/10 min.

4. An interior trim of a motor vehicle, comprising a film according to any one of claims 1 to 3.

## Revendications

1. Film multicouche comprenant au moins un film supérieur et un film inférieur, **caractérisé en ce qu'**au moins le film supérieur contient 15 à 90 phr d'au moins un polymère à base d'éthylène présentant une viscosité Mooney ML1+4, mesurée à 121 °C, de 50 à 80 unités Mooney selon ASTM D1646, le polymère à base d'éthylène présentant au moins 50 % en poids d'unités d'éthylène et une densité inférieure à 0,90 g/cm³, et 10 à 85 phr d'au moins un polypropylène présentant un module de flexion selon ISO 178 supérieur ou égal à 800 MPa, le polypropylène étant un homopolypropylène, et **en ce que** le film supérieur contient en outre au moins un agent compatibilisant de phases, l'agent compatibilisant de phases étant un polypropylène aléatoire, et **en ce que** le film inférieur est compact ou expansé et/ou contient un textile.

2. Film multicouche selon la revendication 1, **caractérisé en ce que** la cristallinité du polymère à base d'éthylène est inférieure ou égale à 30 %, la cristallinité étant déterminée au moyen de la DSC selon ISO 11357-1:2009.

3. Film multicouche selon la revendication 1 ou 2, **caractérisé en ce que** l'agent compatibilisant de phases présente un indice de fluidité à chaud MFI, mesuré à 230 °C sous une charge de 2,16 kg, de 0,1 à 4,0 g/10 min.

4. Garniture intérieure d'un véhicule automobile, comprenant un film selon l'une quelconque des revendications 1 à 3.
